# EUROPEAN PATENT APPLICATION

(11) **EP 1 755 280 A1**
(43) Date of publication of application: **21.02.2007**
(21) Application number: 06017157.6
(22) Date of filing: 17.08.2006
(51) Int. Cl.: H04L 12/28

(54) **Apparatus and method for using wireless resources in wireless local area network system**

(30) Priority: 19.08.2005 KR 20050076311
(71) Applicant: Samsung Electronics Co., Ltd., Yeongtong-gu Suwon-si, Gyeonggi-do (KR)
(72) Inventor: Hwang, Doo-Il, Seocho-gu Seoul (KR)
(74) Representative: Lang, Johannes

(57) **Abstract**

In an apparatus and method for managing wireless resources in a wireless local area network (WLAN) system, stations in the same network are allowed to exchange random back-off information with each other, and thus the probability of data transfer collision is reduced. Therefore, it is possible to efficiently use the wireless resources of the WLAN system.

## Description

### BACKGROUND OF THE INVENTION

### Technical Field

The present invention relates to an apparatus and a method for using wireless resources in a wireless local area network (WLAN) system.

### Related Art

Lately, the Institute of Electrical and Electronics Engineers (IEEE) 802.11 WLAN technology and Voice over Internet Protocol (VoIP) technology have been integrated so as to yield Voice over WLAN (VoWLAN). The VoWLAN network is a new concept which incorporates WLAN protocol into a data-link layer protocol represented by an Ethernet, thereby providing mobility which conventional wired networks cannot. In addition, the VoWLAN incorporates VoIP protocol into a network layer protocol, thereby allowing voice communication as in a public switched telephone network (PSTN).

The primary goal of the VoWLAN is to provide high-quality voice communication service. Thus, voice service should be given a higher priority than general data service so that the voice service is always processed first. According to IEEE 802.11e, the standardization of which is in the finishing stages, priorities of voice service, data service and so forth are set up using an enhanced distributed coordination function (EDCF) algorithm, a data queue is separately set up for each data group, and network resources are used on the basis of competition by random selection in each data group. In addition, the conventional IEEE 802.11 network uses network resources on the basis of competition by random selection using a distributed coordination function (DCF) algorithm regardless of the priorities of services.

However, both of the latter two algorithms use network resources on the basis of competition in which information is not exchanged, and thus they cannot efficiently use relatively scarce wireless resources. When a plurality of stations or nodes are included in one network, using network resources on the basis of competition increases the probability of data transfer collision and causes a problem of resource distribution fairness.

Since conventional IEEE 802.11b uses a resource occupation method based on random selection, data transfer is delayed during the time for the selection, even though resources are not practically used by other WLAN stations. In addition, when data transfer collision occurs, all WLAN stations begin competition for the random selection again, so that the IEEE 802.11b concept has the disadvantage of utilizing network resources inefficiently. In addition, since algorithms based on IEEE 802.11 series define a random back-off time range as increasing in binary exponential form when data transfer collision is repeated continuously, the continuous collisions bring about greater inefficiency of resource use.

### SUMMARY OF THE INVENTION

It is an object of the present invention to provide an apparatus and method for improving the efficiency of recourse use in a wireless local area network (WLAN) system.

The present invention, as described below, provides an efficient network resource utilization scheme based not on simple competition, but rather on sharing of information using the broadcast properties of a local area network (LAN).

According to the present invention, each WLAN station included in the same network broadcasts priority information of data to be transferred, thus sharing the priority information, and transfers data on the basis of received information, thereby reducing the probability of transfer collision.

According to an aspect of the present invention, an apparatus for using wireless resources in a WLAN system comprises a controller which determines whether or not wireless resources are available when data to be transferred is generated, and which transfers the data at a random back-off time selected by the apparatus itself when wireless resources are determined to be available. The transferred data includes the priority information of next transfer data of the apparatus and next random back-off time information of the apparatus.

The controller determines whether or not wireless resources are available using a carrier-sensing scheme.

In addition, the controller causes the priority information of next transfer data and the next random back-off time information to be included in reserved fields of a media access control (MAC) header, and transfers the data.

Furthermore, the controller broadcasts the priority information of next transfer data and the next random back-off time information to other WLAN stations.

According to another aspect of the present invention, an apparatus for using wireless resources in a WLAN system comprises a controller which, when the priority information of next transfer data of another WLAN station, currently transferring data in the same network, and the next random back-off time information of the WLAN station are received from the WLAN station, compares the received random back-off time information with the random back-off time information of the apparatus, changes the random back-off time of the apparatus in consideration of the priorities of data when the random back-off time information is identical, and does not change the random back-off time of the apparatus when the random back-off time information is not identical.

When the random back-off time information is identical, the controller compares the received priority and the priority of the data of the apparatus, changes the transfer time of the apparatus to a time which is shorter (that is, sooner) than the received random back-off time when the priority of the data of the apparatus is higher than the received priority, and changes the transfer time to a time which is larger (that is, later) than the received random back-off time when the received priority is higher than the priority of the data of the apparatus.

The apparatus further comprises a storage unit which stores the received priority information and the random back-off time information.

According to still another aspect of the present invention, a method for using wireless resources in a WLAN system comprises the steps, at a WLAN station, of: determining whether or not wireless resources are available when data to be transferred is generated; and sending the data to other stations in the same network at a random back-off time selected by the WLAN station when wireless resources are determined to be available. The transferred data includes the priority information of next transfer data of the WLAN station and the next random back-off time information of the WLAN station.

The step of sending the data further includes the step of sending the priority information of next transfer data of the WLAN station and the next random back-off time information of the WLAN station to other stations in the same network when the data transfer is successful.

Also, the determining step is carried out by means of a carrier-sensing scheme.

Furthermore, the priority information of next transfer data and the next random back-off time information are included in reserved fields of a MAC header, are transferred, and are broadcast to other WLAN stations.

According to yet another aspect of the present invention, a method for using wireless resources in a WLAN system comprises the steps, at a first WLAN station, of: receiving the priority information of next transfer data of a second WLAN station and next random back-off time information of the second WLAN station from the second WLAN station, the second WLAN station being in the same network and currently transferring data; comparing the received random back-off time information with the random back-off time information of the first WLAN station; and changing the random back-off time of the first WLAN station in consideration of data priorities when the two random back-off times are identical, and not changing the random back-off time of the first WLAN station when the two random back-off times are not identical.

The method further comprises the step of storing the received priority information and the random back-off time information.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a block diagram of a wireless local area network (WLAN) system according to an exemplary embodiment of the present invention;
FIG. 2 illustrates a distributed coordination function (DCF) algorithm;
FIG. 3 illustrates an enhanced distributed coordination function (EDCF) algorithm;
FIG. 4 is a block diagram of a WLAN station according to an exemplary embodiment of the present invention;
FIG. 5 is a flowchart showing a process performed by a WLAN station in transferring data according to the present invention; and
FIG. 6 is a flowchart showing a process performed by a WLAN station in not transferring data according to the present invention.

### DETAILED DESCRIPTION OF THE INVENTION

Hereinafter, exemplary embodiments of the present invention will be described in detail with reference to the accompanying drawings. Like elements are denoted by like reference numerals throughout the drawings. Matters related to the present invention but well-known in the art will not be described in detail when it is deemed that such description would detract from the clarity and conciseness of the disclosure. It is assumed below that the present invention is applied to a system based on an IEEE 802.11 standard.

A voice over wireless local area network (VoWLAN) to which the present invention can be applied will be described first.

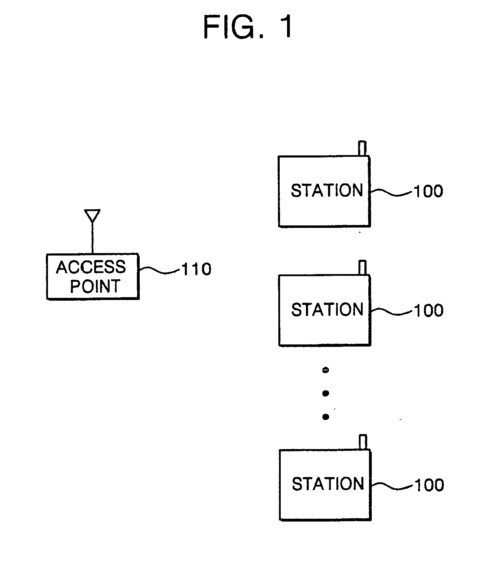

FIG. 1 is a block diagram of a wireless local area network (WLAN) system according to an exemplary embodiment of the present invention.

As shown in FIG. 1, a VoWLAN comprises a plurality of wireless local area network (WLAN) stations 100, an access point 110, a core network (not shown), and so forth. The WLAN stations 100 serve as clients in the network and communicate with an external network through a user interface. Each WLAN station 100 is allotted one telephone number and one Internet protocol (IP) address (which is allotted through a dynamic host configuration protocol (DHCP)). The WLAN stations 100 share random back-off time information and priority information.

The access point 110 provides a WLAN interface based on an Institute of Electrical and Electronics Engineers (IEEE) 802.11 series, and an interface between WLAN stations 100 and the core network. In addition, the access point 110 has a built-in DHCP server which is required to dynamically allot an IP address to each WLAN station 100. The core network (not shown) provides a call connection service and additional services, and is made up of a softswitch (session initiation protocol (SIP) server) and a group of service nodes, the softswitch playing a main role in the core network, and the service nodes storing network information and providing various content services.

According to WLAN technology, WLAN stations (which are a common designation for all devices configuring a WLAN) which configure a network competitively use network resources. In this regard, the WLAN stations use a random back-off algorithm. According to the random back-off algorithm, a point in time when a WLAN station can occupy network resources is randomly selected from a given time.

Exemplary embodiments employing a distributed coordination function (DCF) algorithm of IEEE 802.11b and an enhanced distributed coordination function algorithm of IEEE 802.11e are described below. However, DCF and EDCF technologies will be described first.

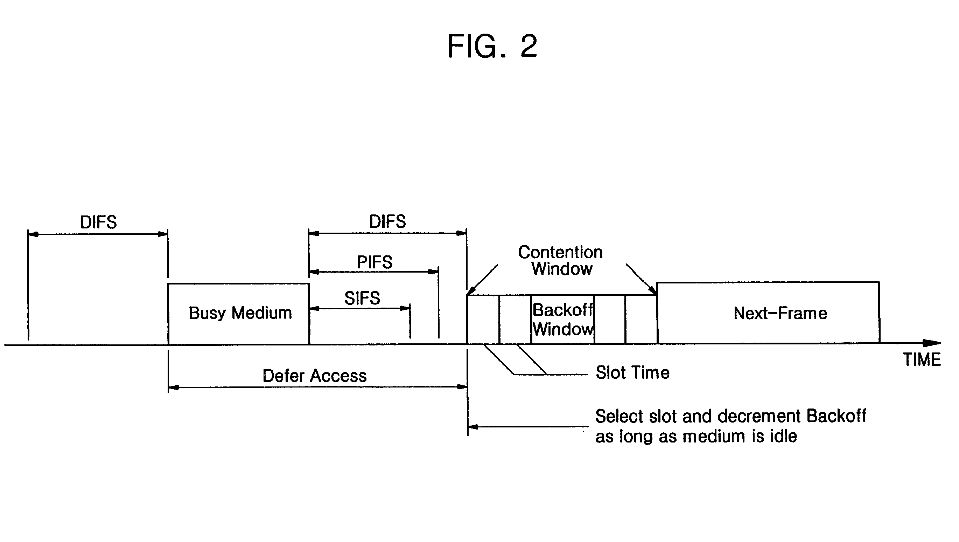

FIG. 2 illustrates a DCF algorithm.

The DCF algorithm is a method which occupies resources on the basis of free competition among WLAN stations participating in a network. When each WLAN station has data (hereinafter, data is a common designation for voice data and general data) to transfer, and when network recourses are being used, each WLAN station delays its own data transfer timing using the random back-off algorithm in order to prevent data transfer collision between itself and other WLAN stations. In addition, a WLAN station which succeeds in data transfer selects a random back-off time for next data transfer. According to the DCF algorithm, a WLAN station for transferring data should select a shortest random back-off time in order to transfer data prior to other WLAN stations. When the same random back-off time is selected by several WLAN stations, a data transfer collision occurs and all WLAN stations begin competition for random back-off time selection again.

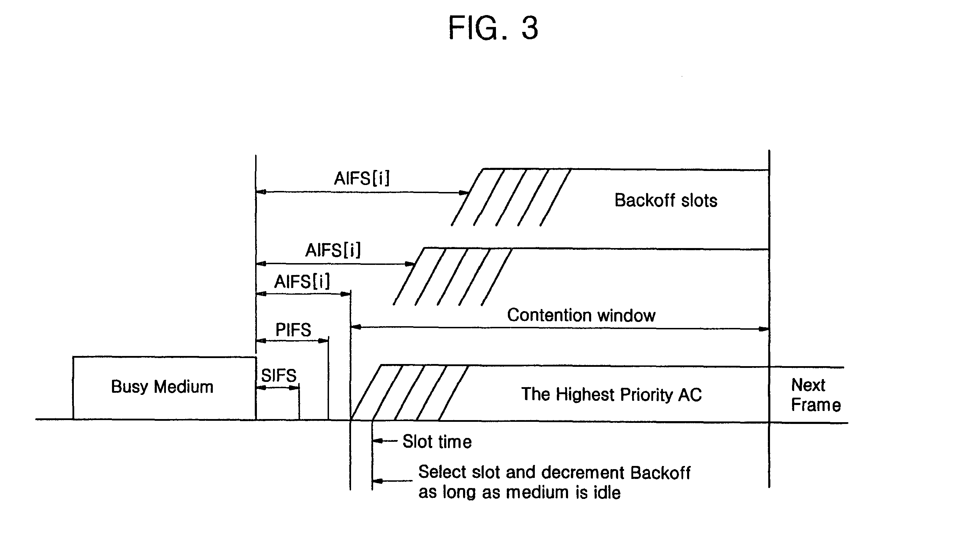

FIG. 3 illustrates an EDCF algorithm.

The EDCF algorithm is a basic algorithm which is the same as the DCF algorithm, but it is different from the DCF algorithm in that it sets up priorities for data to be transferred. The data to be transferred can be classified into groups of voice data, image data, best effort data and background data, and is separately transferred according to the groups. The random back-off algorithm for each data group is the same as the DCF algorithm.

DCF and EDCF algorithms are similar except that the EDCF algorithm considers priority. Therefore, the present invention is described below on the basis of the DCF algorithm, and priority is additionally described when necessary.

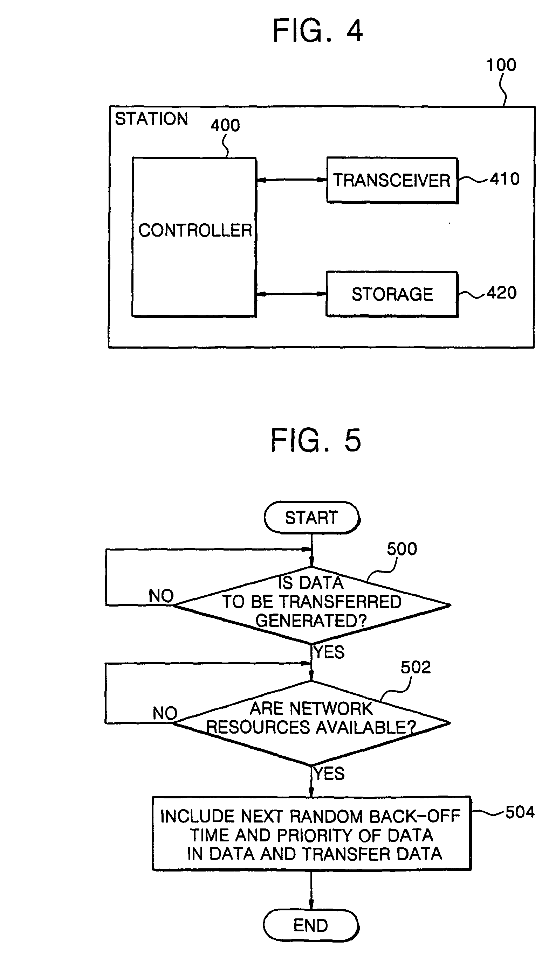

FIG. 4 is a block diagram of a WLAN station according to an exemplary embodiment of the present invention.

The WLAN station 100 includes a controller 400, a transceiver 410 and a storage 420. The controller 400 controls components such as the transceiver 410, the storage 420 and so forth of the WLAN station, and processes data. The transceiver 410 exchanges data with the access point 110. Also, the transceiver 410 transfers data outputted by the controller 400, and outputs received data to the controller 400. The storage 420 stores data used in the present invention. The storage 420 can store data received through the transceiver 410 or data generated by the controller 400.

In the present invention, for the sake of convenience of description, the WLAN stations 100 are classified into two groups: one group which is currently transferring data and another group which is not currently transferring data.

The former case of the WLAN station 100 transferring data will be described first. In this regard, wireless resources are required to transfer data, and one station transferring data should have a shorter random back-off time than other stations transferring data in the same network in order to occupy wireless resources prior to the other stations.

When data to be transferred is generated, the controller 400 of the station determines whether or not there are available wireless resources to transfer the generated data. In this regard, the station uses a carrier-sensing scheme to determine whether or not network resources can be used. When there are wireless resources available, the station transfers the data using the wireless resources. The data transferred by the station includes the corresponding station's next random back-off time information and priority information. In addition, the random back-off time information and the priority information may be included in reserved fields of a media access control (MAC) frame header. The data is broadcast to all WLAN stations in the same network according to the characteristics of the WLAN system, the data including the next random back-off time information and the priority information.

The latter case of the WLAN station 100 not transferring data will now be described.

The WLAN station 100 not transferring data receives the random back-off time information and priority information from the WLAN station 100 that is currently transferring data, compares the received random back-off time with its own random back-off time, and determines whether or not they are identical. If the two random back-off times are identical, a collision occurs when the two WLAN stations transfer data. Therefore, when the two random back-off times are determined to be identical, the WLAN station 100 not transferring data changes its own random back-off time to prevent collision. Meanwhile, when the two back-off times are not identical, a collision does not occur, so neither random back-off time has to be changed.

In the latter regard, the WLAN station 100 not transferring data, and which receives the random back-off time, can consider data priorities when it changes its own random back-off time. When the received random back-off time information and its own random back-off time are identical, it compares the received priority and its own priority, and changes its own random back-off time according to the result of the comparison. More specifically, the station 100 lengthens its own random back-off time (i.e., makes it later) when the received priority is higher than its own priority, and shortens its own random back-off time (i.e., makes it sooner) when the received priority is lower than its own priority.

The storage 420 stores the received random back-off time information and the received priority information.

A method for using wireless resources in a WLAN system according to the present invention is described below.

FIG. 5 is a flowchart showing a process performed by a WLAN station in transferring data according to the present invention.

First, WLAN stations having data to transfer determine whether or not network resources are available using a carrier-sensing scheme (step 500).

When network resources are currently available, a WLAN station which selected the shortest random back-off time transfers data (step 502). In this regard, the WLAN station includes next random back-off time information and the priority order of data to be transferred in a MAC frame header, and transfers the data (step 504). To this end, the WLAN station should reorganize some of the reserved fields into a field for storing the next random back-off time information and another field for storing the priority information, the reserved fields being included in a conventional IEEE 802.11 MAC frame header. In other words, the conventional MAC header needs to be modified. The modification does not require a hardware upgrade, but can be achieved by a software upgrade. Generally, the next random back-off time information is determined after the WLAN station successively transfers the data and then receives an acknowledgement message from the access point 110.

Meanwhile, due to the characteristics of the LAN, data that is transferred by one WLAN station is broadcast to all WLAN stations in the same network. Therefore, other WLAN stations can obtain information as to the random back-off time for next transfer and the priority of the WLAN station currently transferring data. Each WLAN station should manage the random back-off time information and priority information which are received through the broadcast.

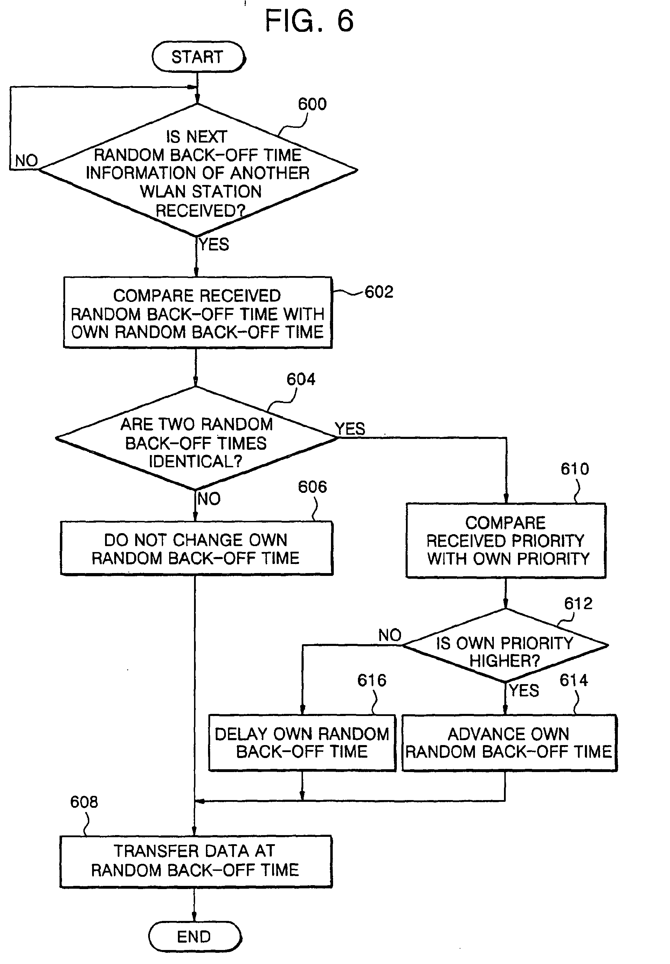

FIG. 6 is a flowchart showing a process performed by a WLAN station in not transferring data according to the present invention.

When each of WLAN stations not currently transferring data receives information as to the random back-off time for next data transfer and the priority (step 600), it compares the received random back-off time for next data transfer with its own random back-off time (step 602), and determines whether or not the two times are identical (step 604).

When the two random back-off times are not identical, a collision does not occur when the WLAN station transfers its own data, so that the WLAN station maintains its own random back-off time constant (step 606). In this regard, the WLAN station stores the received information.

Conversely, when the two random back-off times are identical, the WLAN station compares the priorities of data to be transferred (step 610). When its own priority is higher than the received priority, the WLAN station advances its own transfer time to a point in time which is nearest to the current point of time (step 612). On the other hand, when its own priority is not higher than the received priority, the WLAN station delays its own transfer time to a point in time which is furthest from the current point of time (steps 612 and 616).

According to the present invention, all WLAN stations which are included in the same WLAN refer to information of other WLAN stations as to random back-off times and data priorities, and data transfer collision is prevented.

More specifically, the present invention allows WLAN stations participating in a VoWLAN (particularly, a wireless section) to exchange with each other priority information and random back-off time information for subsequent data transfer, thus largely reducing the probability of data transfer collision and minimizing data transfer time delay. Therefore, compared to a conventional WLAN, the present invention exhibits a relatively high efficiency of network resource use. In addition, since the present invention can be embodied with only a software upgrade and no hardware upgrade is necessary, backwards compatibility with conventional networks is guaranteed.

The present invention decreases the number of collisions occurring when data is transferred in a WLAN system, thus enhancing the efficiency with which wireless resources are utilized.

While the present invention has been described with reference to exemplary embodiments thereof, it will be understood by those skilled in the art that various changes in form and detail may be made therein without departing from the scope of the present invention as defined by the following claims.

## Claims

1. An apparatus for using wireless resources in a wireless local area network (WLAN) system, comprising:
a controller for determining whether wireless resources are available when data to be transferred is generated, and for transferring the data at a random back-off time selected by the apparatus itself when wireless resources are determined to be available, the data including priority information of next transfer data of the apparatus and next random back-off time information of the apparatus.

2. The apparatus of claim 1, wherein the controller determines whether wireless resources are available using a carrier-sensing scheme.

3. The apparatus of claim 1, wherein the controller includes the priority information of next transfer data and the next random back-off time information in reserved fields of a media access control (MAC) header, and transfers the data.

4. The apparatus of claim 1, wherein the controller broadcasts the priority information of next transfer data and the next random back-off time information to other WLAN stations.

5. An apparatus for using wireless resources in a wireless local area network (WLAN) system, comprising:
a controller which, when priority information of next transfer data of a WLAN station, currently transferring data in the same network as the controller, and next random back-off time information of the WLAN station are received from the WLAN station, compares the received random back-off time information with random back-off time information of the apparatus itself; and
wherein, when the random back-off time information is identical, the controller changes the random back-off time of the apparatus, and
wherein, when the random back-off time information is not identical, the controller does not change the random back-off time of the apparatus.

6. The apparatus of claim 5, wherein, when the received random back-off time and the random back-off time of the apparatus are identical, the controller compares a received priority to a priority of the apparatus, the controller changes a transfer time of the apparatus into a time sooner than the received random back-off time when the priority of the apparatus is higher than the received priority, and the controller changes the transfer time of the apparatus into a time later than the received random back-off time when the received priority is higher than the priority of the apparatus.

7. The apparatus of claim 5, further comprising a storage unit for storing the received priority information and the received random back-off time information.

8. A method for using wireless resources in a wireless local area network (WLAN) system, said method comprising at a WLAN station, the steps of:
determining whether wireless resources are available when data to be transferred is generated; and
when wireless resources are determined to be available, transferring the data to other stations in a same network at a random back-off time selected by the WLAN station, the data including priority information of next transfer data of the WLAN station and next random back-off time information of the WLAN station.

9. The method of claim 8, wherein the step of determining whether wireless resources are available is performed by means of a carrier-sensing scheme.

10. The method of claim 8, wherein the priority information of next transfer data of the WLAN station and the next random back-off time information of the WLAN station are included in reserved fields of a media access control (MAC) header, and are transferred.

11. The method of claim 8, wherein the priority information of next transfer data and the next random back-off time information are broadcast to other WLAN stations.

12. A method for using wireless resources in a wireless local area network (WLAN) system, said method comprising, at a first WLAN station, the steps of:
receiving priority information of next transfer data of a second WLAN station and next random back-off time information of the second WLAN station from the second WLAN station, the second WLAN station being in a same network as the first WLAN station, and currently transferring data;
comparing the received random back-off time information to random back-off time information of the first WLAN station; and
changing the random back-off time of the first WLAN station when the random back-off time information of the first WLAN station is identical to the random back-off time of the second WLAN station, and not changing the random back-off time of the first WLAN station when the random back-off time information of the first WLAN station is not identical to the random back-off time of the second WLAN station.

13. The method of claim 12, wherein a received priority of the second WLAN station is compared to a priority of the first WLAN station when the random back-off time of the first WLAN station is identical to the random back-off time of the second WLAN station, wherein a transfer time of the first WLAN station is changed to a time sooner than the received random back-off time when the priority of the first WLAN station is higher than the received priority, and wherein the transfer time of the first WLAN station is changed to a time later than the received random back-off time when the received priority is higher than the priority of the first WLAN station.

14. The method of claim 12, further comprising the step of storing the received priority information and the received random back-off time information.
